# EUROPEAN PATENT APPLICATION

(11) **EP 1 669 919 A1**
(43) Date of publication of application: **14.06.2006**
(21) Application number: 05108548.8
(22) Date of filing: 16.09.2005
(51) Int. Cl.: G06Q 10/00

(54) **A data processing system and data processing method**

(30) Priority: 01.12.2004 US 631891
(71) Applicant: SAP AG, 69190 Walldorf (DE)
(72) Inventor: Abdelfattah, Chalbia, 69190, Walldorf (DE); Weiss, Burkhard, H., 69168, Wiesloch (DE); Abt, Jürgen, 69231, Rauenberg (DE); Becker, Dirk, 69254, Malsch (DE); Gutbrod, Roger, F., 69207, Sandhausen (DE); Haas, Rolf, W., 78713, Schramberg (DE); Puga Ortiz, Juan, 00185, Roma (IT); Schroter, Martin, 76669, Bad Schönborn (DE); Ufer, Stefan, 68165, Mannheim (DE); Wegener, Jörge, 69226, Nussloch (DE)
(74) Representative: Richardt, Markus Albert

(57) **Abstract**

The present invention relates to a data processing system comprising:
- storage means (106) for storing sets of account identifiers, each set of account identifiers having assigned thereto a set of control parameters,
- interface means (112) for coupling to at least one account management system (102), the account management system storing account data (108) of accounts that are identified by the account identifiers,
- a set (110) of application programs, each application program being adapted for processing the account data of accounts identified by at least one of the sets of the account identifiers using the control parameters assigned to the at least one of the sets of account identifiers,
wherein the interface means is adapted to obtain the account data from the account management system on request of one of the application programs of the set of application programs

## Description

### Field of the invention

The present invention relates to the field of data processing, and more particularly without limitation to financial and banking data processing systems.

### Background and prior art

Nowadays financial and banking products and services often require complex data processing functionalities. Such complex functionalities can usually not be provided by legacy account management systems. The provision of such complex data processing functionalities by account management systems thus requires additional programming work which is costly, inefficient and difficult to maintain, or the transition to a replacement account management system that provides the required complex functionalities.

The invention aims to facilitate usage of legacy account management systems for complex data processing functionalities.

### Summary of the invention

In accordance with the present invention there is provided a data processing system comprising storage means for storing sets of account identifiers, each set of account identifiers having assigned thereto a set of control parameters, interface means for coupling to at least one account management system, the account management system storing account data of accounts that are identified by the account identifiers, and a set of application programs, each application program being adapted for processing the account data of accounts identified by at least one of the sets of the account identifiers using the control parameters assigned to the at least one of the sets of account identifiers, wherein the interface means is adapted to obtain the account data from the account management system on request of one of the application programs of the set of application programs.

The present invention is particularly advantageous as it facilitates the implementation of complex data processing functionalities while it allows to continue usage of legacy account management systems. This is accomplished by using one or more account management systems for performing elementary transactions, such as the provision of account data and the execution of requested postings, while the more complex data processing logic is implemented in an additional data processing system that is coupled to the account management system.

In accordance with an embodiment of the invention the data processing system has an application program for overdraft protection of accounts. Some banks offer their customers checking account products that do not allow overdrawing; this is common practice in the US banking industry. Partial-day overdrafts are allowed, but the account must have a positive balance at the end of the posting day after all items from payment transactions are posted to the account.

If the account is overdrawn at the end of the day, the bank usually tries to return debits, e.g. checks, until the account has a positive balance. However, the bank customer is debited with a service charge for such returns. Such returns can also have a negative influence on a customers 'credit score'.

By means of the present invention an overdraft protection functionality can be provided, such as for a checking account. For example, if there is an overdraft of a checking account at the end of the posting day, money is transferred to the checking account from other accounts belonging to the same customer or another customer, in order to increase the balance to a position that covers the posting items. The accounts from which the money is transferred for protection against an overdraft are referred to as 'funding accounts' whereas the overdraft protected account is referred to as the 'funded account' in the following. For example, a checking account, savings account, or credit card account can serve as a funding account. A funding account can be a funded account with respect to another account of the same or another costumer.

Another complex functionality that can be implemented by means of the present invention is bundle pricing. Bundle pricing of services is of interest for the banking and telecommunication industries. For example, a telecommunication customer is charged with telecommunication fees for various telecommunication services, such as voice communication, data communication, the use of pre-paid and post-paid services, and/or the transmitted data volume. The customer receives a rebate for the telecommunication services depending on the amount of usage of the various telecommunication services. The amount of the rebate is calculated by one of the application programs.

Bundle pricing is also commonly used in retail banking. A bank's customer gets a rebate for bank fees, such as fees for account maintenance, inter-account transfers, debit orders, electronic account payments, cash withdrawals and/or interest rates, when a certain condition is fulfilled, e.g. when one of the accounts of the customer exceeds a defined threshold balance. For example, the defined threshold balance can be stored as one of the control parameters.

Further, payment distribution and monitoring (PDM) can be implemented by means of the present invention. Funds that are available on a specified account are distributed to other accounts in accordance with a customer specific distribution plan. The distribution of the funds to various accounts is specified by control parameters.

It is to be noted that the present invention is not limited to the processing of account information and account identifiers but that also other kinds of data can be taken into account. For example, insurance information and information regarding a customer's securities, such as collaterals, can be combined with the accounts information for the various data processing functionalities. This can be accomplished by coupling one or more contract management systems to the inventive data processing system and/or by using an account management system that can also be used for contract management purposes. In this instance a contract identifier can be used rather than an account identifier.

In accordance with an embodiment of the invention the various data processing functionalities serve for the implementation of respective business processes. For example, there is a one to one relationship of application programs and business processes.

In accordance with an embodiment of the invention the concept of master contracts is used. In one implementation there is a one to one relationship between customers and master contracts, i.e. each customer has one single master contract. However, preferably each customer can have more than one master contract and/or a number of customers can have a common master contract.

The accounts and contracts that are assigned to a master contract can belong to different customers. As a practical matter a bank will usually define certain organizational rules that limit this flexibility. For example, usually a funding account of a master contract needs to belong to the same customer as the master contract whereas the funded account can belong to an arbitrary customer.

In accordance with an embodiment of the invention two types of control parameters are utilised. The first type of control parameter relates to an application program with respect to a specific business process, such as the contracting partner, validity periods, priorities, next due date, periodicity of the mass run, etc. This first type of control parameter is set specific, i.e. it is specific to a set of account identifiers or a master contract relative to an application program. A second type of control parameter is specific to an account within a set relative to an application program.

In particular, the control parameter can specify the role of an account. For example, for the purpose of overdraft protection (ODP) the roles are 'funded account' or 'funding account'; for PDM a possible role is 'clearing account' and for bundle pricing a possible role is the reference account to which a rebate determined by the bundle pricing is to be posted.

In accordance with an embodiment of the invention a global parameter for master contract or set can specify the next due date for the performance of an application program or business process with respect to a certain set. In this instance the mass activity selects only those master contracts or sets that are due for processing. After performance of the mass activity the due date for performing the next mass activity is updated automatically. This reflects the agreement between the bank and its customer as it is set forth in the master contract or frame contract with the customer; this agreement with the customer can also encompass the periodicity of the mass activity runs.

In accordance with an embodiment of the invention priorities are only defined for the purpose of ODP. Preferably there are two different kinds of priorities: the first priority specifies the priority with which a master contract is selected for the purpose of performing a mass activity and the second priority specifies the sequence of the processing during the mass activity within the selected set of master contracts. For example, for performance of a mass activity run all master contracts having the highest first, global priorities are selected. Processing of the selected master contracts having the same global priority starts with the master contracts within this selected set that have the highest second type of priority that specifies the order of the processing within the mass activity run. This second priority specifies the order in which access is made to funding accounts.

In accordance with an embodiment of the invention the data processing system has a visualization tool for visualizing the relationships that have been defined between accounts. For example, the visualization tool generates a diagram that shows a customer's accounts and the relationships between the customer's accounts and to accounts of other customers, if any. For example, the diagram shows the relationships between funded and funding accounts. Preferably the priority of the relationship is also displayed.

In another aspect the present invention relates to a data processing method comprising selecting at least one set of account identifiers from a plurality of sets of account identifiers, each set of account identifiers having assigned thereto a set of control parameters, selecting at least one application program of a set of application programs for processing the selected sets of account identifiers, requesting account data of accounts being identified by the account identifiers of the selected sets of account identifiers from at least one account management system, processing the account data in accordance with the control parameters assigned to the account identifiers of the selected sets of account identifiers in order to generate posting requests, transmitting the posting requests to the at least one account management system.

In still another aspect the present invention relates to a computer program product, such as a digital storage medium, comprising computer executable instructions for performing such a method.

### Brief description of the drawings

In the following preferred embodiments of the invention will be described in greater detail by way of example only making reference to the drawings in which:
- Figure 1: is a block diagram of an embodiment of a data processing system of the invention that is coupled to an account management system,
- Figure 2: is a flowchart illustrating an embodiment of a method of the present invention,
- Figure 3: is a diagram illustrating control parameters assigned to account identifiers for overdraft protection,
- Figure 4: is a flowchart illustrating an overdraft protection method of the present invention,
- Figure 5: shows a data entry window for entry of control data specifying funded and funding accounts,
- Figure 6: is a window illustrating the output of a visualization tool,
- Figure 7: is a window for initiating a mass activity.

### Detailed description

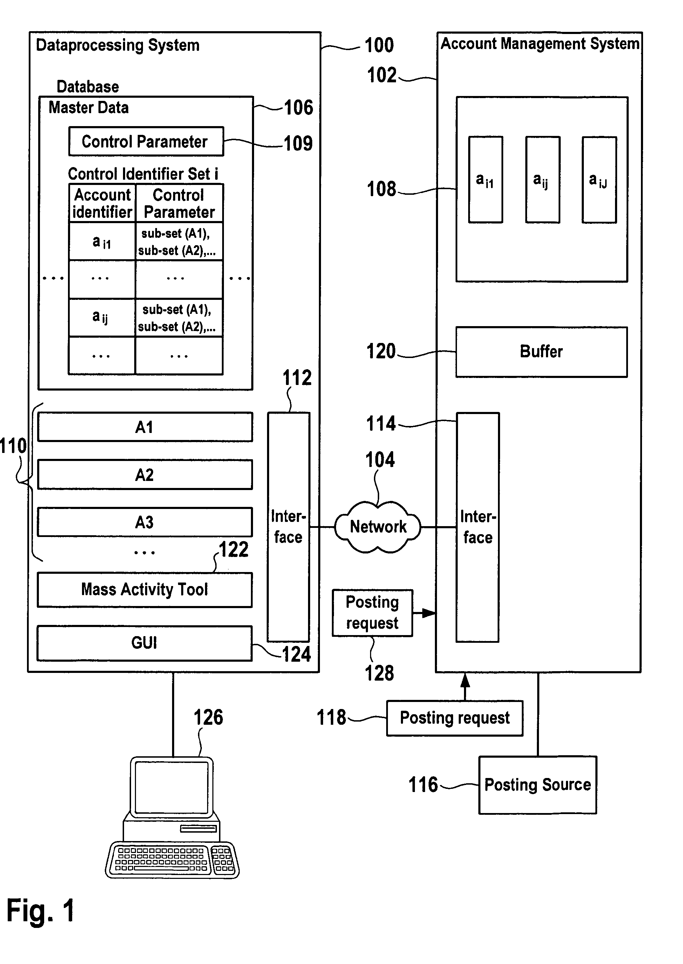

Fig. 1 shows a data processing system 100 that is coupled to at least one account management system 102 via a network 104. The data processing system 100 has a database 106 for storing master data. The master data comprises sets of account identifiers, such as the account identifier set i. The account identifier set i is related to a respective customer i. The account identifier set i comprises the account identifiers aᵢ₁,..., aᵢⱼ,... a_{iJ} of that customer i. The respective account data is maintained by the account management system 102 in its database 108.

The account identifier set comprises first and second types of control parameters for the account identifiers contained in the account identifier set i. The first type of control parameters 109 relates to an application program with respect to a specific business process, such as the contracting partner, validity periods, priorities, next due date, periodicity of the mass run, etc. This first type of control parameter is set specific, i.e. it is specific to a set of account identifiers, ie. a master contract, relative to an application program. For example, the first type of control parameters specify application specific due dates for including the respective set of account identifiers in a mass run for performing that application program.

The second type of control parameter is specific to an account within a set relative to an application program.

In the preferred embodiment considered here the data processing system 100 comprises a set 110 of application programs 110. The set of application programs 110 has an application program A1 that provides an overdraft protection functionality, an application program A2 that provides a bundle pricing functionality, an application program A3 that provides a payment distribution and monitoring (PDM) functionality, and/or various other applications programs.

The account identifier set i has a sub-set of control parameters for controlling the overdraft protection functionality provided by the application program A1, a sub-set of control parameters for controlling the bundle pricing functionality provided by the application program A2, a sub-set of control parameters for controlling the PDM functionality provided by the application program A3,...

The data processing system 100 has an interface 112 for coupling the data processing system 100 to the network 104. The account management system 102 has a corresponding interface 114 for coupling the account management system 102 to the network 104. The interface 112 and the interface 114 implement a protocol for the exchange of information between the data processing system 100 and the account management system 102 in order to provide account data from the account management system 102 to the data processing system 100 and posting requests 128 from the data processing system 100 to the account management system 102. Preferably, the interfaces 112, 114 and the network 104 implement SAP's exchange infrastructure (XI).

For the purpose of overdraft protection (ODP) the account management system 102 needs to support the identification of problematic accounts that require ODP processing. The identification of such problematic accounts can be performed in various ways, e.g. by starting the application program A1 for all due account identifier sets by the data processing system 100 and/or it can be performed by buffering posting requests involving such problematic accounts by the account management system 102.

In the first case the account management system 102 is queried by the data processing system for determination of any problematic funded accounts that requires the overdraft protection processing; in the latter case the content of the buffer is reported from the account management system 102 to data processing system 100 for ODP processing.

The next due date for the processing is updated after the ODP run in both cases.

In essence there are the following alternatives for the ODP processing:
1. The account management system 102 reports the problematic funded accounts to the data processing system. The data processing system 102 determines a sub-set of these reported accounts that are included in one of the account identifier sets, e.g. master contracts, and that are due for ODP processing in accordance with the respective control parameter. For the account identifier sets of the sub-set the ODP run is performed.
2. The data processing system 100 determines the sets of account identifiers (master contracts) for which the OPD run is to be performed. This can be all sets of account identifiers or only those that are due for processing in accordance with the respective control parameter. The funded accounts are identified in the determined set of account identifiers. Next, the data processing system 100 queries the account management system 102 which one of the identified funded accounts are problematic. The data processing system 100 performs the ODP processing for those of the sets of account identifiers that include such a problematic account.

The account management system 102 is coupled to one or more posting sources 116. For example, the posting source 116 sends a posting request 118 to the account management system 102 when a check is received or another financial transaction is to be posted by the account management system 102.

The posting requests 118 received from the at least one posting source 116 during a posting day are buffered in the buffer memory 120 of the account management system 102. At the end of the posting day the posting requests 118 contained in the buffer memory 120 are 'hard' posted on the account by the account management system.

The data processing system 100 has a mass activity tool 122 for parallelized execution of mass activities by a selected one of the application programs. Further, the data processing system 100 has a graphical user interface 124 for a user's interaction with the data processing system 100 by means of a personal computer 126 that is coupled to the data processing system 100.

In operation the account management system 102 receives posting requests 118 during a posting day. At the end of the posting day - before the posting requests 108 that are buffered in the buffer memory 120 are hard posted in the accounts held by the database 108 - the application program A1 is initiated for performance of an overdraft protection run. This can be scheduled by means of the mass activity tool 122.

The application program A1 generates posting requests 128 for transferring money from one or more funding accounts to funded accounts, if required for overdraft protection. The posting requests 128 are sent to the account management system 102 from the interface 112. After these posting requests 128 that have been generated by the application program A1 have been executed by the account management system 102 the posting requests 118 stored in the buffer memory 120 are processed. Due to the previously executed posting requests 128 of the application program A1 overdrafts that would otherwise have occurred are prevented.

Likewise a bundle pricing mass activity can be scheduled using the mass activity tool 122. For the bundle pricing application program A2 the account identifier set i has a sub-set of control parameters that specify the bundle pricing conditions for a given customer i. For performance of the bundle pricing the application program A2 requests account data from the account management system 102 in order to determine transactions for which fees need to be charged and any rebates that need to be given to the customer i in accordance to the control parameters contained in the sub-set.

Likewise payment distribution and monitoring can be performed by means of the application program A3 using the respective sub-set of control parameters contained in the account identifier set i.

The data processing system 100 is particularly advantageous as it can implement complex data processing functionalities using the legacy account management system 102. The legacy account management system 102 does only need to provide elementary functionalities such as execution of a requested posting, buffering of requested postings received from a posting source and providing account data to the data processing system. The higher level business logic is implemented in the data processing system 100 and not in the account management system 102 which enables to continue operation of a legacy account management system 102 despite the introduction of advanced account features and business models.

It is to be noted that more than one account management system 102 can be coupled to the data processing system 100. In this instance each account identifier has an assigned additional identifier for identification of the account management system 102 that holds the account data of that account. For example, these assignments are stored in the interface 112.

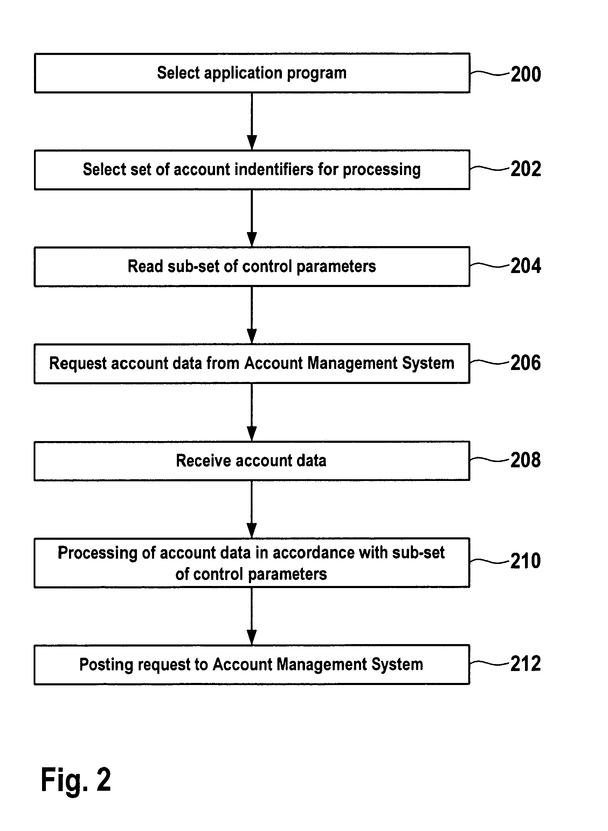

Fig. 2 shows a flowchart illustrating a preferred embodiment of a method of the invention. In step 200 one of the application programs of the data processing system is selected. This can be done either manually or automatically by a scheduler.

In step 202 a set of account identifiers is selected for processing. Typically a large number of such sets of account identifiers are selected either manually or automatically for mass processing of a large number of customer accounts.

In step 204 the sub-set of control parameters that is related to the selected application program is read from the selected account identifier sets of the master data stored in the database (cf. database 106 of fig. 1).

In step 206 account data that is required for the performance of the data processing task of a selected application program is requested from the account management system. In step 208 the requested account data is received. The account data is processed in accordance with the sub-set of the control parameters read in step 204 by the selected application program. As a result of the data processing performed by the selected application program, a number of posting requests are generated which are sent to the account management system in step 212 for immediate execution.

It is to be noted that the selection of the account identifiers can be performed in accordance with specified due dates. The due date can be updated after having performed step 212 in order to indicate the due date of a consecutive processing.

Alternatively, especially for the purposes of ODP, the problematic accounts are obtained from the account management system per application program, such as ODP. For those problematic accounts it is determined whether there are identified in master contracts. With respect to ODP it is determined whether the problematic accounts are identified as funded accounts in one of the master contracts.

If the application program A1 for performing an overdraft protection has been selected the posting requests that are stored in the buffer memory of the account management system are also requested and transferred to the data processing system in order to make a determination whether the transfer of funds from funding accounts to funded accounts is required in order to avoid overdrafts.

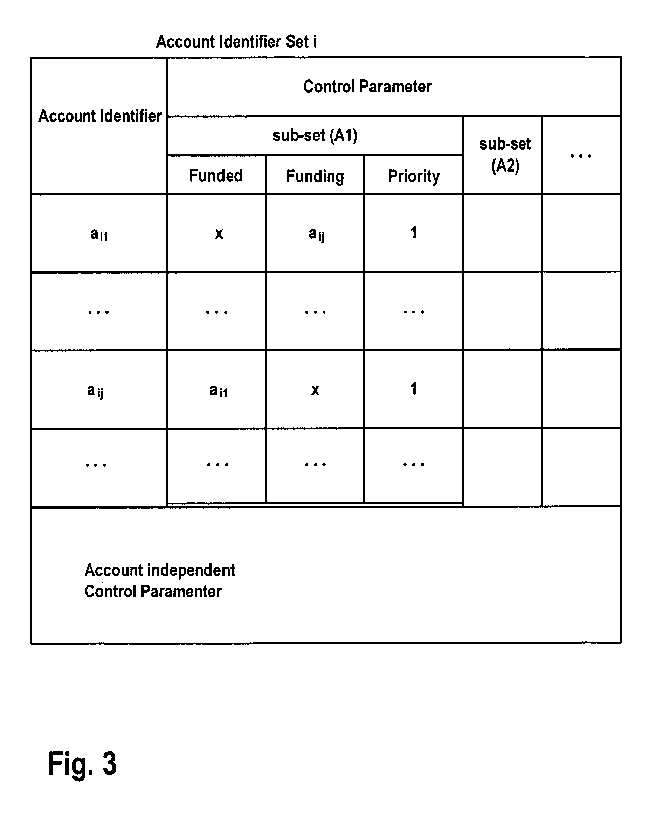

Fig. 3 shows a more detailed embodiment of an account identifier set i. The account identifier set i has a sub-set (A1) of the control parameters that is related to the application program A1. The sub-set (A1) of the control parameters identifies funded accounts that are overdraft protected, funding accounts for providing the required funds for the overdraft protection and a priority for each funding-funded relationship.

In the example considered here the account aᵢ₁ is marked as a funded account. Its funding account is the account aᵢⱼ. The priority of the funding is '1'. In other words, if the funding account aᵢⱼ has other funded accounts, the funding needs of the funded account aᵢ₁ are fulfilled with the highest priority before funding is provided from the funding account aᵢⱼ to its other funded accounts having lower priority relationships with that funding account aᵢⱼ. Likewise, the account aᵢⱼ is marked as a funding account in the account identifier set i and its funded account is identified as account aᵢ₁.

It is to be noted that two different kinds of priorities can be specified here. The first, global priority specifies the order of the selection of a master contract for the performance of a mass activity run whereas the second priority specifies the sequence of the processing within the sub-sets of the master contracts that have been selected for the mass activity run.

It is to be noted that funding-funded relationships can be defined across different account identifier sets of different customers. For example, a husband and wife or the members of a family may want to define such funding relationships of their accounts. In addition the control parameters of the first type, i.e. account independent control parameters, are also included in the account identifier set as shown in Fig. 3.

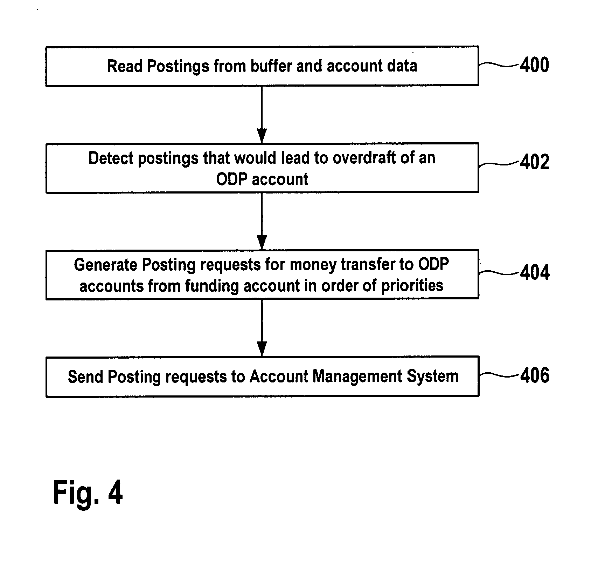

Fig. 4 shows a more detailed embodiment of an overdraft protection method of the invention.

In step 400 the posting requests that have been collected in the buffer memory during the posting day and relevant account data is read from the account management system and transferred to the data processing system for processing by the application program A1 upon a respective request received by the account management system.

In step 402 the application program A1 performs an analysis of the posting requests and the account data in order to identify overdraft protected accounts that require additional funds in order to prevent an overdraft. In step 404 posting requests are generated in order to transfer sufficient funds to overdraft protected accounts from funding accounts, if such funds are available.

Alternatively problematic accounts are read from the account management system; this can be implemented by reading a buffer of the account management system or by a table that is delivered by the account management system containing the problematic accounts. With respect to the problematic accounts it is determined if they are identified in master contracts; with respect to ODP it is determined whether they are identified as 'funded account' in one of the master contracts.

In step 402 a set of account identifiers can be selected for processing, especially the funding accounts. For the funding accounts the account balance is read from the account management system in order to make a determination regarding the amount that can be transferred between the respective accounts.

In step 404 the amounts to be transferred are determined such as by processing the account balances of the funding accounts, the amounts required by the funded accounts and the control parameters. In step 406 the due date for performing the next run can be updated.

Alternatively, only those sets are read that are defined for the application program that performs the ODP. The funded accounts are determined within the selected sets. This corresponds to step 202 of Fig. 2.

The problematic accounts can be obtained from the account management system analogous to step 400. On this basis the amounts to be transferred for the purpose of the ODP are determined analogous to step 404. Finally the next due date for performing the next ODP processing can be updated.

The posting requests are generated in the order of the overdraft protection priorities in order to ensure that at least the highest priority overdraft protected accounts do have sufficient funds. In step 406 the posting requests generated in step 404 are sent to the account management system for execution prior to execution of the posting requests that are buffered in the account management system.

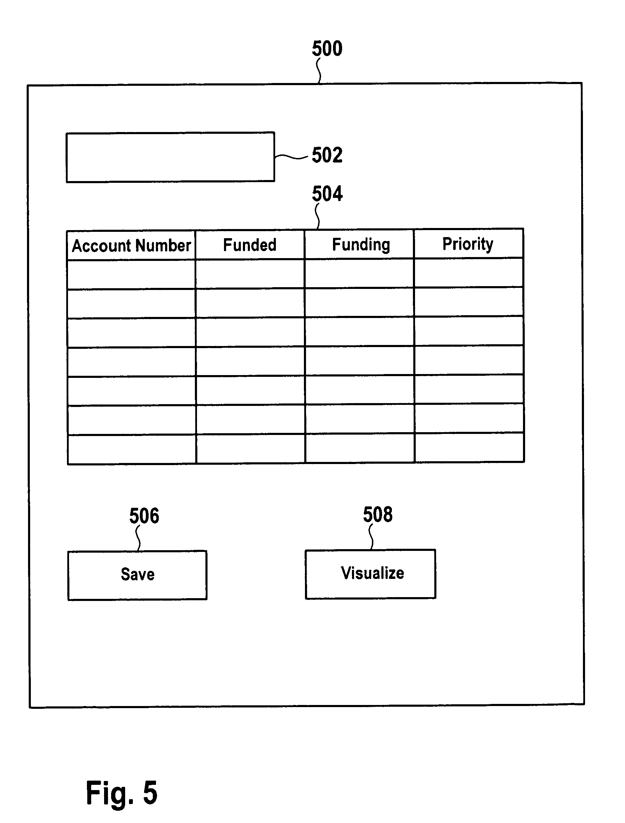

Fig. 5 shows a window 500 of the graphical user interface (cf. GUI 124 of fig. 1) of the data processing system. The window 500 has a data entry field 502 for entry of a customer name. Further, the window 500 has a table 504 for entry of an account identifier set (cf. fig. 3) for that customer. In the example considered here the table 504 serves for specification of funding and funded accounts and the priority of the respective funded-funding relationship. Hence, an operator can enter the sub-set (A1) of the control parameters using the table 504. The table 504 can have additional columns for other sub-sets of control parameters.

Further, the window 500 has a save button 506 for saving the account identifier set and the control parameters that have been entered into the table 504. The window 500 has a button 508 that serves to invoke a visualization tool of the graphical user interface. The visualization tool serves to generate an intuitive display of the funded-funding relationships and their priorities that have been entered into the table 504.

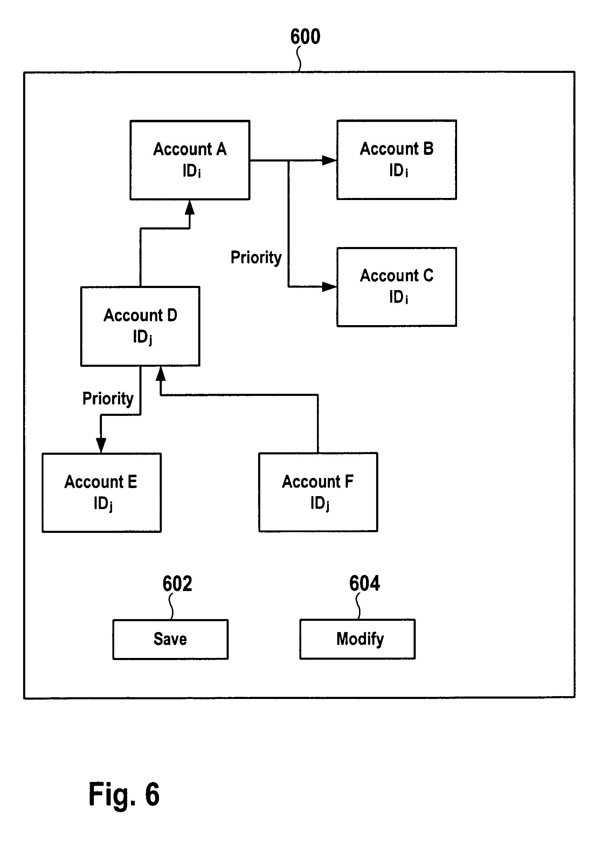

Fig. 6 shows an exemplary window 600 that is generated by the visualization tool for the customer i - that has the identifier (ID) i. In the example considered here there are only two priorities whereby the highest priority relationship is visualized by the word 'priority' displayed near the arrow that symbolizes the funding-funded relationship between two accounts. In the example considered here the account A of the customer i is the funding account of the account B and the account C of that customer. The funding-funded relationship account A-account C has the higher priority.

The account B of another customer j is the funding account for the account A of the customer i. This account D of the customer j is also the funding account of the funded account E of the customer j whereby the funding-funded relationship account D-account E has the higher priority. Further, the account F of the customer j is the funding account for the account D of the customer j.

The window 600 has a button 602 for saving the funding-funded relationships displayed in the window 600 and their priorities. For modification the window 600 has a button 604. By clicking on the button 604 the window 500 opens such that modifications of the funding-funded account relationships and their priorities can be entered.

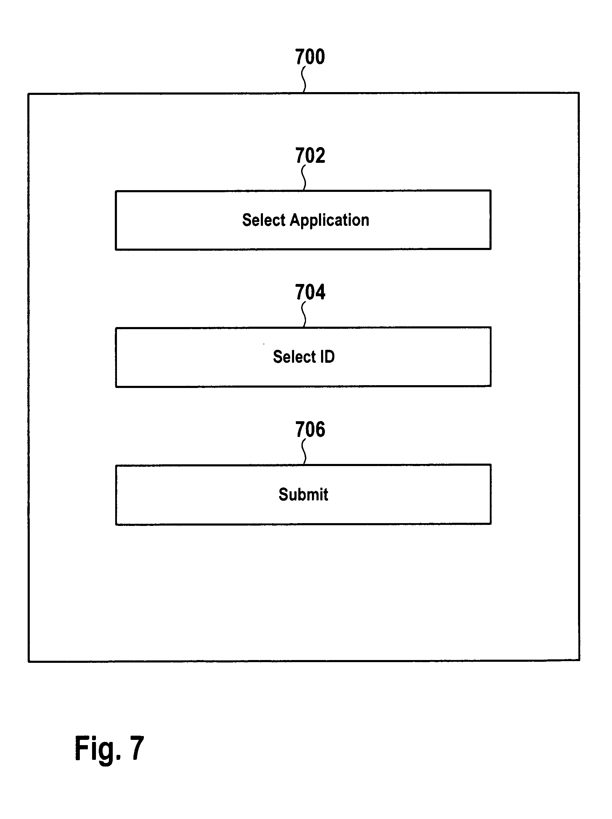

Fig. 7 shows a window 700 of the graphical user interface that is related to the mass activity tool (cf. mass activity tool 122 of fig. 1). The window 700 has as data entry field 702 for selection of one of the application programs A1, A2, A3,... of the set 110. This serves for selection of one of the application programs for performance of a mass activity run. The data entry field 704 of the window 700 serves for entry of a customer selection. By means of the data entry field 704 an operator can select those customers for which the selected mass activity run is to be performed. By clicking on the button 706 the operator can submit the specified mass activity run.

It is to be noted that the present invention is not limited to a particular financial or banking application, such as overdraft protection, bundle pricing and/or PDM, but that it can be broadly used for various other financial and banking transactions that require the services of an account management system. Further, it is to be noted that in embodiments of the present invention the data processing system can be coupled to more than one account management system in order to utilize the account management services of those systems for implementation of the required financial and/or banking functionalities.

### List of reference numerals

| | |
|---|---|
| 100 | Data processing system |
| 102 | Account management system |
| 104 | Network |
| 106 | Database |
| 108 | Database |
| 109 | Control parameter |
| 110 | Set of application programs |
| 112 | Interface |
| 114 | Interface |
| 116 | Posting source |
| 118 | Posting request |
| 120 | Buffer memory |
| 122 | Mass activity tool |
| 124 | Graphical user interface (GUI) |
| 126 | Personal computer (PC) |
| 128 | Posting request |
| 500 | Window |
| 502 | Data entry field |
| 504 | Table |
| 506 | Button |
| 508 | Button |
| 600 | Window |
| 602 | Button |
| 604 | Button |
| 700 | Window |
| 702 | Data entry field |
| 704 | Data entry field |
| 706 | Button |

## Claims

1. A data processing system comprising:
- storage means (106) for storing sets of account identifiers, each set of account identifiers having assigned thereto a set of control parameters,
- interface means (112) for coupling to at least one account management system (102), the account management system storing account data (108) of accounts that are identified by the account identifiers,
- a set (110) of application programs, each application program being adapted for processing the account data of accounts identified by at least one of the sets of the account identifiers using the control parameters assigned to the at least one of the sets of account identifiers,
wherein the interface means is adapted to obtain the account data from the account management system on request of one of the application programs of the set of application programs.

2. The data processing system of claim 1, each application program being adapted to generate a posting request (128) as a result of the processing of the account data, the interface means being adapted to send the posting request to the account management system.

3. The data processing system of claims 1 or 2, the set of control parameters comprising application program specific sub-sets of control parameters.

4. The data processing system of claim 3, one of the application program specific sub-sets of control parameters comprising control parameters for overdraft protection of at least one of the accounts.

5. The data processing system of claim 4, the control parameters of the one of the application program specific sub-sets specifying at least one funded and at least one funding account, wherein the funded account is overdraft protection by the funding account.

6. The data processing system of claim 5, wherein the overdraft protection relationship between a funded and a funding account has an assigned priority.

7. The data processing system of claim 4, 5 or 6, further comprising a visualization program component for visualizing the overdraft protection relationships between funded and funding accounts.

8. The data processing system of any one of the preceding claims 4 to 7, the account management system having a buffer (120) for buffering incoming postings (118) received from a posting source (116), wherein the buffer is adapted to transfer the buffered postings to the data processing system for processing prior to booking the postings on the respective accounts for the purpose of overdraft protection.

9. The data processing system of any one of the preceding claims 3 to 8, one of the application program specific sub-sets comprising control parameters for bundle pricing.

10. The data processing system of any one of the preceding claims 3 to 9, one of the application program specific sub-sets comprising control parameters for payment distribution and monitoring.

11. The data processing system of any one of the preceding claims, further comprising a mass activity tool (122) for mass processing of a plurality of the sets of account identifiers by a selected application program of the set of application programs.

12. A data processing method comprising:
- selecting at least one set of account identifiers from a plurality of sets of account identifiers, each set of account identifiers having assigned thereto a set of control parameters,
- selecting at least one application program of a set (110) of application programs for processing the selected sets of account identifiers,
- requesting account data of accounts being identified by the account identifiers of the selected sets of account identifiers from at least one account management system (102),
- processing the account data in accordance with the control parameters assigned to the account identifiers of the selected sets of account identifiers in order to generate posting requests (128),
- transmitting the posting requests to the at least one account management system.

13. The data processing method of claim 12, the set of control parameters comprising application program specific sub-sets of control parameters, one of the application program specific sub-sets comprising control parameters for overdraft protection of at least one of the accounts.

14. The data processing method of claim 13, the control parameters specifying at least one funded account and at least one funding account, the funded account being overdraft protected by means of the funding account, and further comprising generating a posting request for performing a money transfer from the funding account to the funded account.

15. The data processing method of claim 14, the relationship between a funded account and a funding account having a priority assigned thereto, wherein the posting requests for transferring money from a funding account to a funded account are generated in accordance with the priorities assigned to the relationships.

16. The method of any one of the preceding claims 12 to 15, wherein postings that are buffered in a buffer of the account management system are transferred for processing by the selected application program prior to booking the postings on the respective accounts held in the account management system.

17. The data processing method of any one of the preceding claims 12 to 16, further comprising a bundle pricing step.

18. The data processing method of any one of the preceding claims 12 to 17, further comprising a payment distribution and monitoring step.

19. A computer program product comprising computer executable instructions for performing a method in accordance with any one of the preceding claims 12 to 18.
